# EUROPÄISCHE PATENTSCHRIFT

(11) **EP 2 984 192 B1**
(45) Veröffentlichungstag und Bekanntmachung des Hinweises auf die Patenterteilung: **25.09.2019**
(21) Anmeldenummer: 14723696.2
(22) Anmeldetag: 10.04.2014
(51) Int. Cl.: C22B 3/16, C22B 7/00, C22B 3/00, C22B 25/06

(54) **VERFAHREN ZUR KONZENTRATION VON METALLEN AUS METALLHALTIGEN ABFÄLLEN**
METHOD FOR CONCENTRATING METALS FROM SCRAP CONTAINING METAL
PROCÉDÉ DE CONCENTRATION DE MÉTAUX À PARTIR DE DÉCHETS CONTENANT DES MÉTAUX

(30) Priorität: 12.04.2013 DE 102013006318
(43) Veröffentlichungstag der Anmeldung: 17.02.2016
(73) Patentinhaber: Loser, Ulrich, 04721 Rosswein / OT Grunau (DE); Palitzsch, Wolfram, 09599 Freiberg (DE)
(72) Erfinder: PALITZSCH, Wolfram, 09599 Freiberg (DE)
(74) Vertreter: Rumrich, Gabriele
(86) Internationale Anmeldenummer: PCT/DE2014/100127
(87) Internationale Veröffentlichungsnummer: WO 2014/166484

(56) Entgegenhaltungen:
- EP-A1- 1 050 604
- WO-A1-2011/130622
- CN-A- 102 191 383
- DE-A1- 4 100 839
- US-A- 5 755 950

## Beschreibung

Die vorliegende Erfindung betrifft ein Verfahren zur Konzentration bzw. Rückgewinnung von Metallen in Form von Silber aus metallhaltigen Abfällen, welches insbesondere zum Recycling metallhaltiger, insbesondere silberhaltiger, Katalysatoren oder anderer silberhaltiger Abfälle, wie mit Silber bedruckte Siliziumwafer, flexible gedruckte Schaltkreise basierend auf nano-Silber-Tinte und/oder Kontakte aus Silber-Nano-Drähten und/oder Lote Anwendung findet.

Silber findet man unter anderem als Hauptbestandteil der meisten Kontakte auf Siliziumwafem der Photovoltaikmodule oder als Wirksubstanz auf Katalysatoren, die in der chemischen Industrie für die Ethylenoxid- oder Formaldehydproduktion verwendet werden. Weitere Metalle, die in den Abfällen vorkommen sind beispielsweise Blei und/oder Zinn. Auch für weniger bekannte Anwendungen werden Silber und andere Metalle wie Blei und/oder Zinn verwendet, wie Lager von Motoren, Batterien, RFID-Tags, Lote und Tinte für Leiterplatten. Sowohl für Silberkatalysatoren als auch für Silberkontakte auf Siliziumwafem werden hydrometallurgische Recyclingverfahren angewendet, die auf Salpetersäure basieren und durch die Entwicklung von nitrosen Gasen nicht ohne eine aufwendige und teure Gasreinigungsanlage betrieben werden können. Andererseits sind pyrometallurgische Verfahren bekannt, die allerdings aufgrund steigender Energiepreise an ihre wirtschaftlichen Grenzen stoßen - auch wegen der abnehmenden Silberkonzentration in den zu bearbeitenden Materialien, welche sich durch eine erfolgreiche Materialeinsparung an Silber bei der Herstellung ergibt.

Aus der Druckschrift WO 2011/130622 A1 wird ein Verfahren zur Behandlung von Gedruckten Schaltkreisen offenbart, die mit einer Lösung aus Methansulfonsäure und einem Oxidationsmittel behandelt werden. Auch aus den Druckschriften DE 41 00 839 A1, EP 1 050 604 A1 und CN 102 191 383 A sind Methoden zur Behandlung metallhaltiger Abfälle bekannt.

In Anbetracht des verschärften Wettbewerbs und steigender Energiepreise besteht ein Bedarf nach einem verbesserten, möglichst vielseitig anwendbaren Recyclingverfahren und damit verbesserter Wirtschaftlichkeit.

Die Aufgabe der Erfindung besteht somit darin, ein Verfahren zur Konzentration bzw. Rückgewinnung von Metallen aus metallhaltigen Abfällen zu entwickeln und damit ein universelles Recyclingverfahren bereitzustellen, welches die Recyclingverfahren des Standes der Technik ökonomisch und ökologisch übertrifft. Die Aufgabe der Erfindung wurde überraschenderweise wie in den Patentansprüchen angegeben gelöst.

Die vorliegende Erfindung betrifft daher ein vielseitig anwendbares hydrometallurgisches Verfahren zur Behandlung von Metallen in Form von Silber, insbesondere silberhaltigen Abfällen .

Verfahrensgemäß erfolgt die Rückgewinnung von Metallen in Form von Silber aus metallhaltigen (insbesondere silberhaltigen) Abfällen, dadurch, indem man die Abfälle mit einer Sulfonsäure der Formel R-SO₂-OH, wobei R ein organischer Rest oder eine Amidogruppe (-NH₂) ist, in Gegenwart eines Oxidationsmittels behandelt und wobei die Behandlung der metallhaltigen Materialien/Abfälle mit mindestens 15%iger Sulfonsäure 1/10 Masseprozent an 30%iger Wasserstoffperoxidlösung, gerechnet auf 50%ige Sulfonsäure, zur Bildung von Silbersulfonat führt.

Mit dieser neuen universellen Methode werden die Nachteile von bisher angewendeten Verfahren, nämlich der Verlust der eingesetzten Lösemittel und die Gefahr der Bildung von hoch giftigen Gasen, wie nitrose Gase überwunden.

Die Abfälle werden bei Bedarf vor der hydrometallurgischen Behandlung so zerkleinert, dass die metallhaltigen (silberhaltigen) Materialien einer Flüssigkeit zugänglich werden. Das Abfallmaterial wird mit einer Mischung aus verdünnter Sulfonsäure, vorzugsweise Methansulfonsäure (CH₃-SO₂-OH) und einem Oxidationsmittel, vorzugsweise Wasserstoffperoxid überschichtet. Das Silber und/oder Silberoxid lösen sich überraschenderweise sofort auf, bis eine maximale Konzentration von 713g/l Silbermesylat (CH₃-SO₂-O-Ag) bei 23°C erreicht wird. Diese gesättigte Silbermesylatlösung wird mit HCl im stöchiometrischen Verhältnis versetzt, so dass das darin gelöste Silber vollständig als reines Silberchlorid ausfällt, welches abfiltriert und gewaschen wird. Gleichzeitig wird dadurch die Sulfonsäure zurückgewonnen, die nun wieder einer neuen Behandlung weiterer silberhaltiger Materialien bzw. Abfälle zur Verfügung steht, so dass die Sulfonsäure als eine Art Extraktionsmittel aufgefasst werden kann, welches sich nicht verbraucht. Damit gelingt es wirtschaftlich, auch geringste Mengen an Silber aus verschiedensten silberhaltigen Materialien zu konzentrieren und zurückzugewinnen. Ein weiterer wesentlicher Vorteil dieses Verfahrens liegt in der Umweltverträglichkeit der Methansulfonsäure, da sie nach der OECD Richtlinie 301A biologisch abbaubar ist.

Kombinationen wie beispielsweise p-Toluolsulfonsäure/Wasserstoffperoxid, Amidosulfon-säure/Wasserstoffperoxid oder Amidosulfonsäure/Ammoniumpersulfat wirken gleichfalls und liefern entsprechend der nachfolgenden Behandlung mit stöchiometrischen Mengen HCl (bezogen auf die Silberkonzentration) ein reines Silberchlorid und die entsprechende Sulfonsäure.

Die Erfindung wird nachfolgend anhand einer Zeichnung und Ausführungsbeispielen näher erläutert.

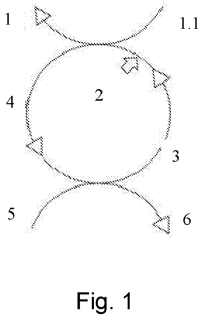

In Figur 1 ist ein Schema abgebildet, welches am Beispiel für das System silberhaltiger Abfall/Methansulfonsäure/Wasserstoffperoxid zeigt, wie eine kontinuierliche Extraktion und damit Konzentration des Metalls, hier Silber, erfolgt.

Der prinzipielle Ablauf gemäß Figur 1 am Beispiel des Silbers und Methansulfonsäure ist folgender:
Silberhaltiger Abfall 1.1 in Form der Ag/Matrix wird mit einer Mischung aus Wasserstoffperoxid 2 (H₂O₂) und Methansulfonsäure 3 (H-OSO₂CH₃ oder CH₄SO₃) behandelt. Dabei entsteht zunächst Silbermesylat 4 (Ag-OSO₂CH₃) welches sehr gut löslich ist. Von dem silberhaltigen Abfall 1.1 wurde dadurch das Silber entfernt, so dass der entmetallisierte Abfall 1 entsorgt oder anderweitig recycelt werden kann. Der Silbergehalt der erhaltenen Lösung kann analytisch ermittelt werden, so dass im Anschluss mit der stöchiometrischen Menge an Chlorwasserstoff 5 (HCl) das schwerlösliche Silberchlorid 6 (AgCl) ausgefällt werden kann. Dabei wird das Wasserstoffion vom HCl gegen das Silber ausgetauscht, so dass letztlich die Methansulfonsäure 3 (H-OSO₂CH₃) zurück gebildet wird.

Nachfolgend werden einige konkrete Ausführungsbeispiele erläutert:

### Ausführungsbeispiel 1:

100,39g gebrauchtes silberhaltiges Katalysatormaterial (Abfallmaterial) wurden mit einer Mischung aus 100g 50%iger Methansulfonsäure (CH₄O₃S) und 10g 30%igem Wasserstoffperoxid (H₂O₂) versetzt. Die ursprünglich dunkle Farbe des Katalysatormaterials verschwand augenblicklich und der weiße Grundkörper des Abfallmaterials aus Aluminiumoxid wurde sichtbar. Die Lösung wurde abfiltriert und analysiert. Der Silbergehalt wurde mit 35g/l bestimmt. 78,08g dieser Lösung wurde mit 0,626g 32%iger Salzsäure (HCl) versetzt, wobei sofort das Silber (Ag) als schwerlösliches Silberchlorid (AgCl) ausfiel. Dieses wurde abfiltriert, gewaschen und getrocknet. Das so gewonnene Silberchlorid hatte eine Masse von 2,68g. Das Filtrat enthielt die zurückgewonnene Methansulfonsäure CH₄O₃S.

### Ausführungsbeispiel 2:

13,89g Silizium-Cell-Bruch, auf welchem nur noch die silberhaltigen Kontakte vorhanden waren, wurden mit einer Mischung aus 20g 50%iger Methansulfonsäure und 2g 30%igem Wasserstoffperoxid überschichtet. Die silbrigen Adern auf den Siliziumplättchen lösten sich schnell auf, wobei die Lösung leicht grau und trüb wurde, was an den unlöslichen Bestandteilen der Silberpasten lag. Diese Lösung wurde filtriert und analysiert. Der Silbergehalt lag bei 8,1 g/l.

Nach Zugabe von 170mg 32%iger Salzsäure wurde das ausgefällte Silberchlorid gewaschen, getrocknet und gewogen. Die Ausbeute betrug 0,21g.

### Ausführungsbeispiel 3:

5g Silberpulver wurden mit 13,5g einer 25%igen Amidosulfonsäurelösung (NH₂-SO₂-OH) überschichtet. Dazu wurden langsam 10 Tropfen einer 35%igen Wasserstoffperoxidlösung dosiert. Nach vollständigem Auflösen des Silbers wurde die klare Lösung mit 12 g einer 31%igen versetzt und der entstandene, weiße Niederschlag aus Silberchlorid abfiltriert. Ausbeute: 6,6g AgCl

### Ausführungsbeispiel 4:

20g Abfall, bestehend aus flexiblen Dünnschichtphotovoltaikzellen wurden zerschnitten und mit insgesamt 500 ml einer 40%igen Methansulfonsäurelösung versetzt. Unter Rühren wurden 40 ml einer 50%igen Wasserstoffperoxidlösung dosiert und nach Auflösen der photoaktiven Verbindungshalbleiterschicht und der Silberkontakte wurde filtriert und die Lösung analysiert: 2000mg/l Ag, 2000mg/l Se, 400mg/l Cu, 750mg/l In und 120mg/l Ga.

Zu dieser Lösung wurden 1g einer 33%igen HCl-Lösung getropft, wobei sofort ein weißer Niederschlag entstand. Dieser wurde abfiltriert und getrocknet. Ausbeute: 1,3g AgC. Im Filtrat wurde kein Silber mehr gefunden, wohl aber die anderen Metalle.

Mit der erfindungsgemäßen Lösung wird ein Verfahren zur Verfügung gestellt, mit welchem es gelingt, ökologisch und ökonomisch wertvolle Metalle in Form von Silber aus entsprechend metallhaltigen Abfällen, wie Katalysatoren oder Abfällen aus der Photovoltaik-Industrie zu extrahieren und einer weiteren Verwertung verfügbar zu machen.

### Bezugszeichenliste

- 1: entmetallisierter Abfall (Matrix)
- 1.1: silberhaltiger Abfall (Ag-Matrix)
- 2: Wasserstoffperoxid (H₂O₂)
- 3: Methansulfonsäure, die einfachste Organosulfonsäure H-OSO₂CH₃)
- 4: Silbermesylat, das einfachste Silberorganosulfonat (Ag-OSO₂CH₃)
- 5: Chlorwasserstoff (HCl)
- 6: Silberchlorid (AgCl)

## Patentansprüche

1. Verfahren zur Konzentration von Metallen, in Form von Silber aus metallhaltigen Abfällen, indem man die silberhaltigen Abfälle mit einer Sulfonsäure der Formel R-SO₂-OH, wobei R ein organischer Rest oder -NH₂ ist, in Gegenwart eines Oxidationsmittels behandelt
und bei einem silberhaltigen Abfall eine erhaltene Silbersulfonatlösung durch Zugabe von stöchiometrischen Mengen an HCl zur Ausfällung des Silbers als Silberchlorid und gleichzeitig zur Rückbildung der jeweiligen Sulfonsäure führt und
die Mischung aus Sulfonsäure und einem Oxidationsmittel Blei und/oder Zinn in silberhaltigen Abfällen in ihre gut löslichen Sulfonate überführt, daraus extrahiert und einer weiteren Verwertung verfügbar gemacht wird und wobei die Behandlung der metallhaltigen Abfälle mit mindestens 15%iger Sulfonsäure 1/10 Masseprozent an 30%iger Wasserstoffperoxidlösung, gerechnet auf 50%ige Sulfonsäure, zur Bildung von Silbersulfonat führt.

2. Verfahren nach Anspruch 1, **dadurch gekennzeichnet, dass** der organische Rest -CH₃ ist.

3. Verfahren nach Anspruch 1 oder 2, **dadurch gekennzeichnet, dass** als Sulfonsäure 15%ige bis 50%ige Methansulfonsäure verwendet wird.

4. Verfahren nach einem der Ansprüche 1 bis 3, **dadurch gekennzeichnet, dass** die Reaktion bei Umgebungstemperatur abläuft.

5. Verfahren nach Anspruch 4, **dadurch gekennzeichnet, dass** die Reaktionszeit durch eine Erhöhung der Temperatur im Vergleich zur Umgebungstemperatur und/oder eine Erhöhung der Oxidationsmittelkonzentration verkürzt wird.

6. Verfahren nach einem der Ansprüche 1 bis 5, **dadurch gekennzeichnet, dass** die metallhaltigen Abfälle Silber und Blei und/oder Zinn enthalten und dass die vorgenannten Metalle durch ein hydrometallurgisches Verfahren unter Verwendung einer Mischung aus Wasserstoffperoxid (H2O2) und Methansulfonsäure (CH3-SO2-OH oder CH4SO3) behandelt werden, wodurch die Metalle aus den metallhaltigen Abfällen gelöst werden und dass die Metalle anschließend selektiv ausgefällt werden.

7. Verfahren nach einem der Ansprüche 1 bis 6, **dadurch gekennzeichnet, dass** im Falle einer Bleimesylatlösung die Zugabe von Schwefelsäure zur Rückbildung der Methansulfonsäure, bei gleichzeitigen Ausfällen von Bleisulfat führt.

8. Verfahren nach einem der Ansprüche 1 bis 7, **dadurch gekennzeichnet, dass** das Verfahren durch eine ständige Regeneration der Sulfonsäure kontinuierlich betrieben wird.

## Claims

1. Method for concentrating metals, in the form of silver from metal-containing wastes, by treating the silver-containing wastes with a sulfonic acid of the formula R-SO₂-OH, wherein R is an organic radical or -NH₂, in the presence of an oxidizing agent and, in the case of a silver-containing waste, a silver sulfonate solution obtained leads to the precipitation of silver as silver chloride by addition of stoichiometric amounts of HCl and at the same time to reform the respective sulfonic acid,
and the mixture of sulfonic acid and an oxidizing agent converts lead and/or tin in silver-containing wastes into their readily soluble sulfonates, is extracted therefrom and made available for further utilization, and wherein the treatment of the metal-containing wastes with at least 15% sulfonic acid 1/10% by mass of 30% hydrogen peroxide solution, calculated to 50% sulfonic acid, results in the formation of silver sulfonate.

2. Method according to claim 1, **characterized in that** the organic radical is -CH₃.

3. Method according to claim 1 or 2, **characterized in that** 15% to 50% methanesulfonic acid is used as sulfonic acid.

4. Method according to one of claims 1 to 3, **characterized in that** the reaction takes place at ambient temperature.

5. Method according to claim 4, **characterized in that** the reaction time is shortened by an increase in the temperature in comparison with the ambient temperature and/or an increase in the concentration of oxidizing agent.

6. Method according to one of claims 1 to 5, **characterized in that** the metal-containing wastes contain silver and lead and/or tin, and **in that** the aforementioned metals are treated by a hydrometallurgical process using a mixture of hydrogen peroxide (H₂O₂) and methanesulfonic acid (CH₃-SO₂-OH or CH₄SO₃), whereby the metals are dissolved from the metal-containing wastes, and **in that** the metals are subsequently selectively precipitated.

7. Method according to one of claims 1 to 6, **characterized in that**, in the event of a lead methylate solution, the addition of sulfuric acid results in the reformation of methanesulfonic acid with simultaneous precipitation of lead sulfate.

8. Method according to one of claims 1 to 7, **characterized in that** the method is operated continuously by continuous regeneration of the sulphonic acid.

## Revendications

1. Procédé pour la concentration de métaux sous la forme d'argent issu de déchets contenant des métaux, dans lequel les déchets contenant de l'argent sont traités avec un acide sulfonique de formule R-SO₂-OH, où R est un radical organique ou -NH₂, en présence d'un oxydant
et, si les déchets contiennent de l'argent, l'argent contenu dans une solution de sulfonate d'argent obtenue est précipité en même temps que l'acide sulfonique utilisé est reconstitué par l'ajout de quantités stoechiométriques de HCl et
le mélange d'acide sulfonique et d'un oxydant convertit le plomb et/ou l'étain présents dans les déchets contenant de l'argent en leurs sulfonates facilement solubles, les en extrait et les rend disponible pour sa valorisation,
et dans lequel le traitement des déchets contenant des métaux avec de l'acide sulfonique à 15 % au moins dans un rapport de 1/10% en poids avec une solution de peroxyde d'hydrogène à 30 %, converti en acide sulfonique à 50 %, provoque la formation de sulfonate d'argent.

2. Procédé selon la revendication 1, **caractérisé en ce que** le radical organique est du -CH₃.

3. Procédé selon la revendication 1 ou 2, **caractérisé en ce que** l'acide sulfonique utilisé est de l'acide méthanesulfonique à 15 % à 50 %.

4. Procédé selon l'une des revendications 1 à 3, **caractérisé en ce que** la réaction se déroule à température ambiante.

5. Procédé selon la revendication 4, **caractérisé en ce que** le temps de réaction est abrégé par une élévation de la température par rapport à la température ambiante et/ou par une augmentation de la concentration d'oxydant.

6. Procédé selon l'une des revendications 1 à 5, **caractérisé en ce que** les déchets contenant des métaux contiennent de l'argent et du plomb et/ou de l'étain et **en ce que** ces métaux sont traités par un procédé hydrométallurgique mettant en oeuvre un mélange de peroxyde d'hydrogène (H₂O₂) et d'acide méthanesulfonique (CH₃-SO₂-OH ou CH₄SO₃), par lequel les métaux sont extraits des déchets contenant des métaux, et **en ce que** les métaux sont ensuite précipités sélectivement.

7. Procédé selon l'une des revendications 1 à 6, **caractérisé en ce que**, dans le cas d'une solution de mésylate de plomb, l'ajout d'acide sulfurique provoque la reconstitution de l'acide méthanesulfonique en même temps que la précipitation de sulfate de plomb.

8. Procédé selon l'une des revendications 1 à 7, **caractérisé en ce qu'**il fonctionne en continu par la régénération permanente de l'acide sulfonique.
